# EUROPÄISCHE PATENTSCHRIFT

(11) **EP 1 256 043 B1**
(45) Veröffentlichungstag und Bekanntmachung des Hinweises auf die Patenterteilung: **05.11.2003**
(21) Anmeldenummer: 01927647.6
(22) Anmeldetag: 05.02.2001
(51) Int. Cl.: G06F 3/023

(54) **VERFAHREN UND DATENVERARBEITUNGSSYSTEM ZUR KOORDINIERUNG VON ANWENDUNGEN EINER COMPUTER-SOFTWARE**
METHOD AND DATA PROCESSING SYSTEM FOR COORDINATING APPLICATIONS OF A COMPUTER SOFTWARE
PROCEDE ET SYSTEME DE TRAITEMENT DE DONNEES POUR COORDONNER DES APPLICATIONS D'UN LOGICIEL D'ORDINATEUR

(30) Priorität: 04.02.2000 DE 10004809; 21.02.2000 EP 00103697
(43) Veröffentlichungstag der Anmeldung: 13.11.2002
(73) Patentinhaber: Hobrack, Bernd J., 88400 Biberach (DE)
(72) Erfinder: Hobrack, Bernd J., 88400 Biberach (DE)
(74) Vertreter: Hössle Kudlek & Partner
(86) Internationale Anmeldenummer: EP0101199
(87) Internationale Veröffentlichungsnummer: WO01056351

(56) Entgegenhaltungen:
- EP-A- 0 531 060
- US-A- 5 978 816

## Beschreibung

Die vorliegende Erfindung betrifft ein Verfahren zur Koordinierung von wenigstens zwei öffenbaren Anwendungen einer Computer-Software sowie ein Datenverarbeitungssystem und ein Computerprogramm.

In zahlreichen Datenverarbeitungsanwendungen ist es notwendig, auf Papier vorliegende Informationen in ein Datenverarbeitungssystem einzugeben. Herkömmlicherweise erfolgt dies dadurch, daß ein Sachbearbeiter als Benutzer eines Personal Computers arbeitet und hierbei eine dialogorientierte Anwendung zur Erfassung von "realen" Vorgangsdaten bedient. Dabei überträgt er diese Informationen in ein dem Bearbeitungsvorgang zugrunde liegendes Prozeß- und Datenmodell von beliebiger Komplexität.

Herkömmlicherweise waren derartige Arbeiten nur in sehr unergonomischer Weise durchzuführen, da ständige Kopfbewegungen zur Erfassung der Information auf dem Papier einerseits und zur Eingabe der Information in die entsprechenden Felder auf dem Bildschirm des Personal Computers notwendig waren.

Als "reale" Informationen sei hierbei sämtliches Wissen bezeichnet, das erforderlich ist, um Eigenschaften und Ausprägungen des besagten Bearbeitungsvorgangs ermitteln zu können und um relevante Entscheidungen treffen zu können, die erforderlich sind, um die von der Anwendung vorgesehenen Bearbeitungsschritte vornehmen zu können. Als Beispiel sei die Übertragung von Daten eines Versicherungsnehmers, welche dieser auf ein Versicherungsantragsformular aufgebracht hat, in eine Computer-Software, welche derartige Versicherungsanträge bearbeitet, angegeben.

Zur Vereinfachung derartiger Tätigkeiten ist es bekannt, die papierförmigen Informationsträger abzulichten bzw. zu scannen und so die Dokumente in digitalisierter Form zur Verfügung zu stellen. Derart digitalisierte Dokumente sind beispielsweise als "Bildformat" auf einem Bildschirm darstellbar.

Als Arbeitserleichterung ist es bekannt, einen graphischen Bildbereich des eingescannten Dokuments als erstes Fenster, und die dialogorientierte Anwendung als zweites Fenster auf einem Bildschirm gleichzeitig zu öffnen. Bei Bildschirmen herkömmlicher bzw. wirtschaftlicher Größe ist es hierbei nicht möglich, das gesamte gescannte Dokument in lesbarer Größe abzubilden, so daß lediglich graphische Teilbildbereiche ("View") dargestellt werden. Der Benutzer muß daher die ihn interessierenden Bereiche des eingescannten Dokuments nacheinander in den dargestellten Bildbereich einbringen. Dies geschieht herkömmlicherweise durch die sogenannte "Scroll-Funktion", beispielsweise mittels Tastenoder Mausbefehl.

Aufgabe eines Benutzers ist daher, die "realen" Informationen aus dem eingescannten Dokument in die dialogorientierte Anwendung zu übertragen, so daß diese in DV-gestützten Prozessen verarbeitet werden können. Es ist ferner möglich, derartige Informationen dazu zu verwenden, über die Dialogorientierte Anwendung DV-gespeicherte Informationen zu verändern.

Das notwendige manuelle Verschieben des eingescannten Dokumentes, so daß jeweils die gewünschten Bereiche in das Sichtfenster kommen, erweist sich in der Praxis als sehr aufwendig und stellt ferner eine nicht zu unterschätzende Fehlerquelle dar.

Aus EP 0 531 060 A und US 5 978 816 A ist eine Informationshervorhebung am korrespondierenden Stellen in zwei in Beziehung zueinander stehenden Anwendungen bekannt.

Aufgabe der Erfindung ist die Bereitstellung eines Verfahrens, eines Datenverarbeitungssystems und eines Computerprogramms, mit denen eine manuell vorzunehmende Übertragung von Informationen bzw. Daten aus einer ersten Anwendung in wenigstens eine zweite Anwendung gegenüber herkömmlichen Lösungen erleichtert ist.

Diese Aufgabe wird gelöst durch ein Verfahren mit den Merkmalen des Patentanspruchs 1, ein Datenverarbeitungssystem mit den Merkmalen des Patentanspruchs 3 sowie ein Computerprogramm mit den Merkmalen des Patentanspruchs 5.

Durch die erfindungsgemäß vorgesehene selektive Informationshervorhebung von im Rahmen der ersten Anwendung dargestellten Informationen ist die Tätigkeit eines Benutzers bzw. Anwenders, diese Informationen in eine zweite Anwendung zu übertragen, aufgrund der hierdurch zur Verfügung gestellten ergonomischen Koordinierung der beiden Anwendungen gegenüber herkömmlichen Lösungen stark vereinfacht. Verwandte Tätigkeiten sind ebenfalls mit geringerem Aufwand möglich, als Beispiel sei der Vergleich zwischen Informationen, welche einen gleichen Vorgang betreffen, jedoch in unterschiedlichen Anwendungen bzw. Formaten vorliegen, genannt. Bei Verwendung der vorliegenden Erfindung sind ferner Monitore wesentlich kleiner dimensionierbar.

Vorteilhafte Ausgestaltungen des erfindungsgemäßen Verfahrens, des erfindungsgemäßen Datenverarbeitungssystems und des erfindungsgemäßen Computerprogramms sind Gegenstand der Unteransprüche.

Gemäß einer ersten bevorzugten Ausführungsform des erfindungsgemäßen Verfahrens bzw. des erfindungsgemäßen Systems ist eine erste Anwendung der Computer-Software eine graphische Darstellung eines digitalisierten bzw. eingescannten Dokuments, und eine zweite Anwendung eine dialogorientierte Anwendung zur Eingabe und/oder Wiedergabe und/oder Verarbeitung von Informationen bezüglich des digitalisierten Dokuments. Hierdurch ist es möglich, beispielsweise ein eingescanntes Dokument in einer ersten Anwendung auf einem Bildschirm in Teilansicht zu präsentieren, wobei die Dialog-orientierte Anwendung auf dem gleichen Bildschirm darstellbar ist. Durch geeignete Hervorhebung der jeweiligen Informationen des digitalisierten Dokuments ist die Eingabe oder Übertragung der entsprechenden Informationen in Dialogfelder stark vereinfacht.

Gemäß einer bevorzugten Ausführungsform des erfindungsgemäßen Verfahrens werden die Informationen der ersten Anwendung dadurch selektiv hervorgehoben, daß sie insbesondere in einem mittleren Bereich eines Fensters, welches durch die erste Anwendung generiert ist, automatisch positioniert werden. Hierdurch ist gewissermaßen eine Automatisierung der herkömmlichen Scroll-Funktion zur Verfügung gestellt. Erfindungsgemäß wird gewährleistet, daß, in Abhängigkeit von hervorgehobenen Informationen der zweiten Anwendung, der entsprechende Informationsbereich der ersten Anwendung für den Anwender gut sichtbar in einem Fenster der ersten Anwendung positioniert wird. Es sei darauf hingewiesen, daß die erfindungsgemäß vorgesehene Hervorhebung von Informationen auch auf beliebige andere geeignete Weise erfolgen kann. Beispielsweise ist es möglich, insbesondere im Falle von größeren Fenstern, in welchen entsprechend größere Ausschnitte eines digitalisierten Dokuments sichtbar sind, die jeweils relevanter. Bereiche farbig oder auf andere Weise hervorzuheben. Es ist ebenfalls denkbar, in einem derartigen vergrößerten Fenster die interessierenden Bereiche zoomartig hervorzuheben, so daß umgebende Informationen zwar teilweise überdeckt werden, jedoch wenigstens teilweise noch erkennbar sind.

Zweckmäßigerweise werden die Informationen oder Informationsfelder der zweiten Anwendung mittels eines Fokus, insbesondere eines Cursors, und/oder eines sprachgesteuerten Fokus, hervorgehoben, wobei insbesondere semantische Kontextbereiche der Informationen oder der Informationsfelder einsetzbar und/oder durch den Benutzer definierbar sind. Auf diese Weise sind Informationen oder Informationsfelder der zweiten Anwendung in einfacher Weise hervorhebbar bzw. markierbar, so daß die entsprechenden zugeordneten Informationen der ersten Anwendung in entsprechender Weise hervorhebbar sind. Auch hier sind weitere Hervorhebungsmöglichkeiten denkbar. Beispielsweise wäre es möglich, entsprechende Informationen oder Informationsfelder mittels Rahmenbildung zu markieren bzw. hervorzuheben.

Es besteht also die Möglichkeit, über Maus-, Tastatur- oder Sprachbefehlsaktionen Benutzereingaben bezüglich der zweiten Anwendung zu empfangen. Als ebenfalls vorteilhaft erweist sich, semantische Kontextbereiche bestimmter fokussierter Informationen bzw. fokussierter Informationsfelder zu definieren, so daß für den Benutzer eine besonders übersichtliche Arbeitsplatzgestaltung bzw. Bildschirmoberfläche zur Verfügung steht.

Bevorzugte Ausführungsformen des erfindungsgemäßen Verfahrens bzw. des erfindungsgemäßen Datenverarbeitungssystems werden nun anhand der beigefügten Zeichnung weiter erläutert. In dieser zeigt:
- Figur 1: eine erste bevorzugte Ausführungsform einer Benutzeroberfläche, mit welcher das erfindungsgemäße Verfahren realisierbar ist,
- Figur 2: die Ansicht der Figur 1, wobei Hervorhebungsmöglichkeiten für die jeweiligen Informationen angedeutet sind,
- Figur 3: eine der Figur 1 entsprechende Ansicht, wobei jedoch andere Informationsabschnitte der jeweiligen Anwendungen hervorgehoben sind,
- Figur 4: eine zweite bevorzugte Benutzeroberfläche, bei welcher das erfindungsgemäße Verfahren einsetzbar ist,
- Figur 5: die Ansicht der Figur 4, wobei Hervorhebungsmöglichkeiten für die jeweiligen Informationen angedeutet sind, und

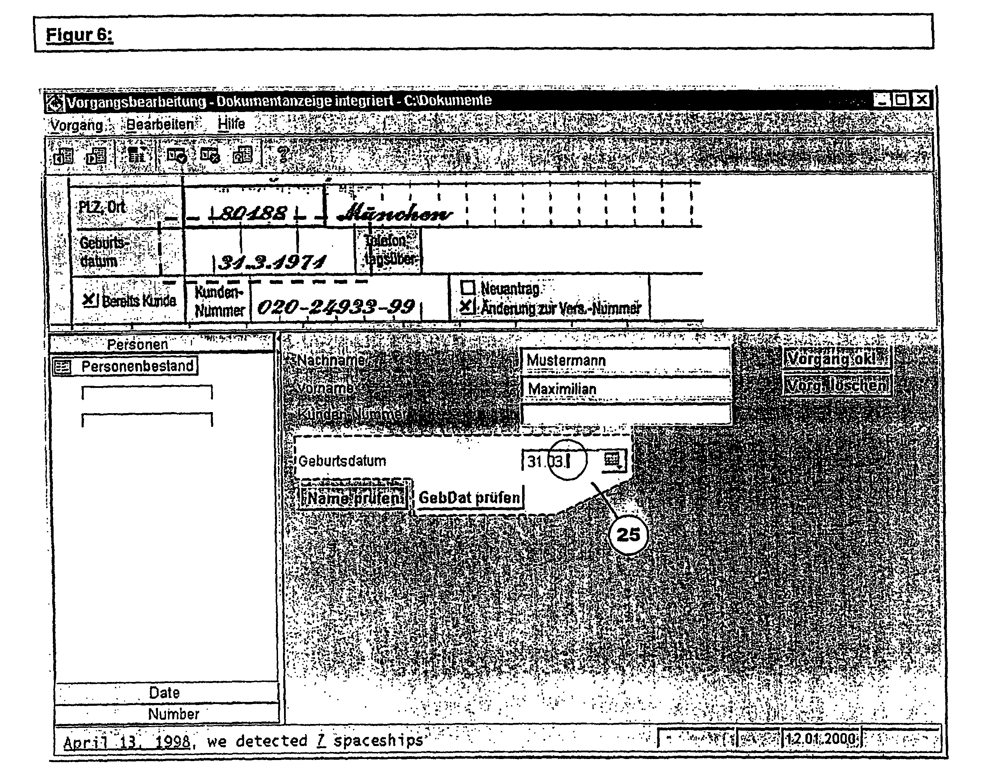

- Figur 6: eine der Figur 3 entsprechende Ansicht der zweiten bevorzugten Benutzungsoberfläche.

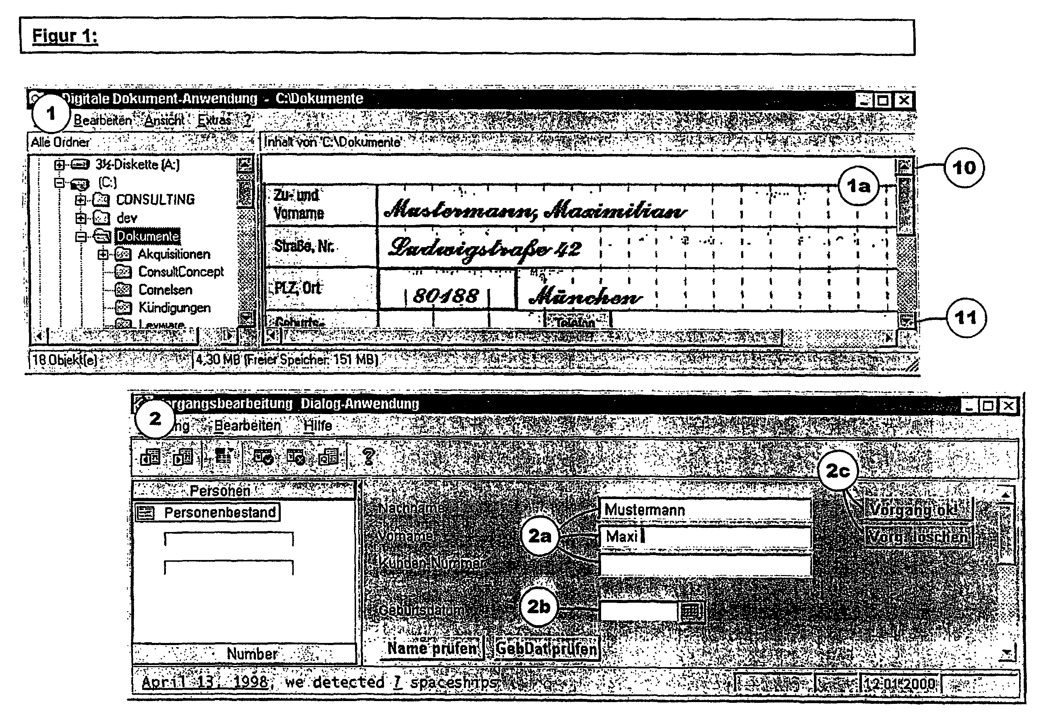

In Figur 1 ist schematisch eine dem Benutzer auf einem Bildschirm eines Computersystems entgegentretende Benutzeroberfläche dargestellt. Man erkennt, daß zwei Anwendungen 1, 2 geöffnet sind. Die Anwendung 1 zeigt in einem Fenster 1a (sogenannter "View") einen Ausschnitt eines digitalisierten Dokuments. Aus Gründen der Anschaulichkeit sei angenommen, daß das Dokument ein von Hand ausgefüllter Antrag auf eine staatliche Zuwendung oder für eine Versicherung ist. Selbstverständlich sind beliebige andere Dokumente denkbar bzw. in gescannter Form darstellbar.

In dem dargestellten Fenster 1a erkennt man Name und Adresse des Antragstellers. Dem Benutzer des Computersystems stellt sich nun beispielsweise die Aufgabe, die in dem Fenster 1a eingegebenen Daten in die zweite offene Anwendung, welche im dargestellten Beispiel eine dialogorientierte Anwendung ist, einzugeben. Man erkennt, daß die Eingabe des Namens bereits teilweise erfolgt ist. Die dialoggesteuerte Anwendung 2 weist Datenfelder 2a, 2b und Steuerungselemente, sogenannte Buttons, 2c auf. Da die Aufgabe des Benutzers darin besteht, die Informationen aus der ersten Anwendung in die zweite Anwendung einzugeben, stellt letzteres gewissermaßen die Hauptanwendung des Bearbeitungsvorgangs dar.

Will der Benutzer nun beispielsweise das Geburtsdatum des Antragstellers in das Datenfeld 2b eingeben, stellt sich die Schwierigkeit, das diese Information in dem dargestellten Bildabschnitt 1a der Anwendung 1 nicht vorliegt. Herkömmlicherweise war der Benutzer in diesem Fall gezwungen, das Dokument beispielsweise mittels Anklickens der Scroll-Felder 10, 11 der ersten Anwendung zu scrollen, um die gewünschte Information bezüglich des Geburtsdatums in dem Fensterbereich 1a zu positionieren. Dies stellt sich in der Praxis als sehr unübersichtlich, aufwendig und arbeitsintensiv dar, so daß die vorliegende Erfindung anstrebt, beispielsweise diesen Scrollvorgang zu automatisieren, wie im folgenden erläutert wird. Es ist unter Anwendung des erfindungsgemäßen Verfahrens ebenfalls möglich, beispielsweise in der zweiten Anwendung 2 vorliegende Daten anhand des eingescannten Dokuments der Anwendung 1 zu überprüfen, wie ebenfalls weiter unten noch erläutert wird.

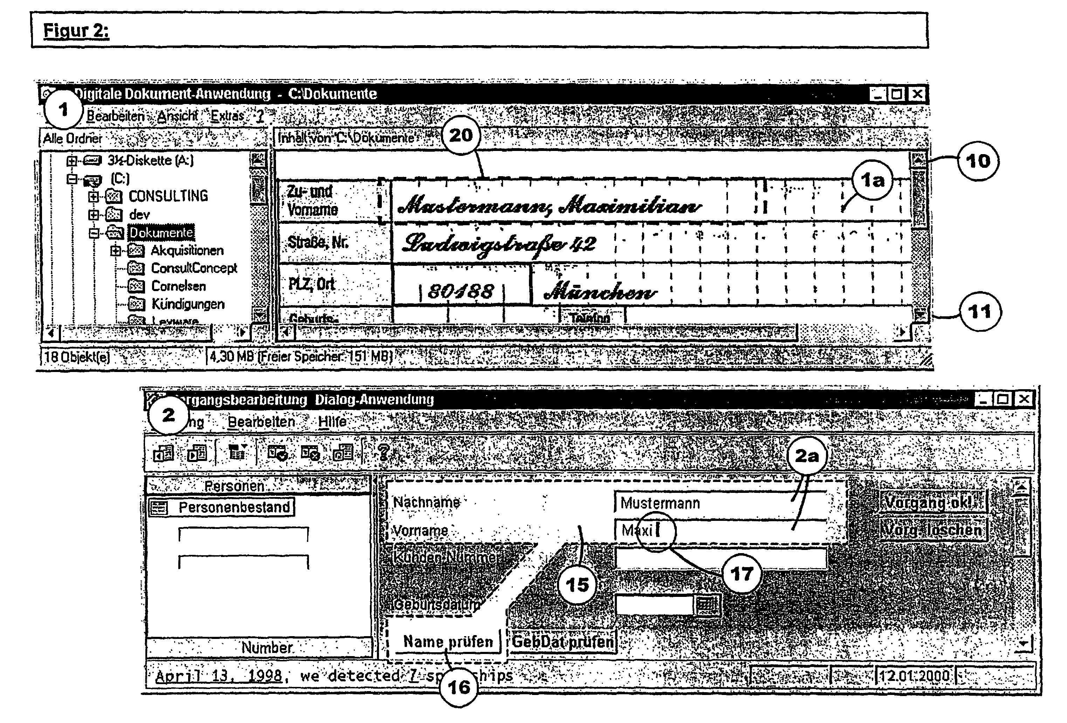

Das erfindungsgemäße Verfahren wird nun zunächst anhand der Figur 2 beispielhaft erläutert.

Ziel der Erfindung ist es, Informationsbereiche bzw. semantische Kontextbereiche der jeweiligen Anwendungen 1, 2 miteinander in Beziehung zu bringen, so daß bei Vorgabe eines Informationsbereiches in einem der beiden Anwendungen der entsprechende Informationsbereich in der jeweils anderen Anwendung automatisch dargestellt bzw. dem Benutzer zugänglich gemacht wird.

Ein derartiger semantischer Kontextbereich ist in Figur 2 mit 15 bezeichnet und mittels einer helleren Schattierung hervorgehoben. Die Hervorhebung mittels hellerer Schattierung ist, falls gewünscht, auf dem Bildschirm darstellbar, jedoch nicht notwendig.

Wenn nun der Benutzer das Steuerungselement 16 "Name prüfen" anklickt, erkennt das System den diesem Steuerungselement zugeordneten Kontextbereich und setzt diesen in Beziehung mit einem entsprechenden Kontextbereich des in dem Fenster 1a der ersten Anwendung 1 eingescannten Dokuments. Eine Vorgabe eines Kontextbereiches ist beispielsweise ebenfalls dadurch möglich, daß, ohne das Steuerungselement 16 anzuklicken, ein Cursor 17 in ein entsprechendes Datenfeld 2a eingebracht wird. Kontextbereiche sind gewissermaßen induktiv (Aufrufen eines einzelnen Elements eines Kontextbereiches) oder deduktiv (Aufrufen eines den Kontextbereich insgesamt bezeichnenden Steuerungselements) definierbar oder aufrufbar. Als besonders einfache Form eines Kontextbereiches sei ein einzelnes Informationsfeld, beispielsweise das Informationsfeld 2a "Nachname" angegeben, welches in diesem Fall eindeutig dem dargestellten Feld "Zu- und Vorname" in dem eingescannten Dokument zuordnenbar ist.

Eine weitere Anwendung des erfindungsgemäß vorgesehenen Einsatzes von Kontextbereichen besteht darin, daß beispielsweise bei Fokussieren bzw. Anklicken des Informationsfeldes "Nachname" ein anschließendes Anklicken des Steuerungselementes 16, welches dem gleichen semantischen Kontextbereich wie das Informationsfeld "Nachname" zugeordnet ist, zu einem Abrufen einer im Hintergrund laufenden Datenbank führt.

Wie beschrieben deklariert also der Benutzer mittels Betätigung eines Steuerungselements (z. B. Button 16) oder eines Cursors 17 einen semantischen Kontextbereich, d. h. eine Gruppierung aus fokussierbaren bzw. hervorhebbaren Datenfeldern und Steuerungselementen auf der Arbeitsoberfläche seiner Dialoganwendung, die vorteilhafterweise in einem engen Sinnzusammenhang zueinander stehen und/oder auch in den (digitalisierten) eingescannten Formularen in enger räumlicher Anordnung zu finden sind.

Alternativ zur individuellen Deklaration kann der Benutzer aus einer Konfigurationsdatenbank, in der die benutzten Dialoge und Formulare mit Deklarationsdaten gespeichert sind, die erforderlichen Angaben zur Aktivierung der Kontextbereiche entnehmen und für das erfindungsgemäße Verfahren einsetzen. Geeignete Softwareinstrumente können den Benutzer bei der individuellen Deklaration und bei der Erweiterung und Pflege der Konfigurationsdatenbanken unterstützen.

Bezüglich des Cursors sei angemerkt, daß dieser beispielsweise der aus vielen Anwendungen mit graphischer Benutzeroberfläche bekannte, blinkende Cursor in den editierbaren Datenfeldern (beispielsweise 2a) und/oder der Fokus auf einem Steuerungselement bzw. einem Button sein kann.

Wie erwähnt, kann der Benutzer im Fenster der Anwendung 1 einen Informationsbereich definieren (beispielsweise durch Aufbringen eines gestrichelten Rahmens) und damit die für die funktionale Zentrierung wichtigen Koordinaten als kontextrelevanten Gegenpol zum semantischen Kontextbereich implizieren. Diese Definition sollte derart durchgeführt werden, daß die formularinhaltlichen Informationen mehr oder weniger geeignet dem "sinnhaften" Zusammenhang des Kontextbereiches entsprechen. Diese Interpretation und Beurteilung unterliegt zweckmäßigerweise dem Benutzer selbst. Ausgenommen sind Voreinstellungen in der Grundfigurationsdatenbank. Geeignete Softwareinstrumente können den Benutzer bei der Definition unterstützen.

Die automatische Positionierung des gewünschten Informationsbereiches des eingescannten Dokuments der Anwendung 1 in dem Fenster 1a ist beispielsweise dadurch realisierbar, daß jedem Informationsbereich der zweiten Anwendung ein bestimmter Bereich eines Formulars, welches die Grundlage des einzuscannenden Dokuments darstellt, zugeordnet wird. Es ist dann beispielsweise softwaremäßig in einfacher Weise möglich, bei Aufrufen eines Informationsbereiches in der zweiten Anwendung einen zugeordneten Bereich des eingescannten Bereichs der ersten Anwendung festzustellen und diesen in dem Fenster 1a zu positionieren. Die Vorgehensweise stellt gewissermaßen einen Hyperfokus im Sinne eines übergreifenden Fokus zwischen zwei Informationsbereichen mit unterschiedlichen Datenformaten zur Verfügung.

Umgekehrt ist es ebenfalls möglich, beispielsweise per Hand einen gewünschten Informationsabschnitt des eingescannten Dokuments durch Betätigung der Scroll-Felder 10, 11 in dem Fenster 1a zu positionieren. Hierdurch wird ein zu betrachtender Informationsbereich graphisch festgelegt. Durch umgekehrte softwaremäßige Zuordnung eines entsprechenden Informationsbereiches der zweiten Anwendung ist dann die dem Benutzer entgegentretende Oberfläche der zweiten Anwendung in entsprechender Weise einrichtbar. Bei Mehrdeutigkeiten kann das System eine Auswahl entsprechender Dialogmasken vorschlagen.

Das dargestellte System stellt insgesamt einen semantischen Hyperfokus zwischen zwei semantischen Kontextbereichen zweier unterschiedlicher Anwendungen zur Verfügung. Die beispielhaft angegebenen Fokussierungsmöglichkeiten mittels Cursor 17 oder Scrollvorgang ("Graphikfokus") sind hierbei rein beispielhaft zu verstehen.

Das automatische Positionieren des gewünschten Informationsabschnitts in dem Fenster 1a bzw. das entsprechende Aufrufen der Informationsbereiche der Anwendung 2 stellt hierbei eine Hervorhebung im Sinne der Patentansprüche dar. Es sei angemerkt, daß eine Hervorhebung auch in anderer Form realisiert sein kann, beispielsweise durch farbige Hervorhebung und/oder Fettdruck und/oder Zoomen der interessierenden Bereiche des eingescannten Dokuments. Letzere Vorgehensweise ist beispielsweise dann von Interesse, wenn größere Bereiche eines eingescannten Dokuments in dem Fenster 1a gezeigt werden bzw. wenn größere Bildschirme zur Verfügung stehen, welche größere Fenster 1a erlauben.

Es sei angemerkt, daß dem Benutzer zweckmäßigerweise freigestellt wird, ob er das erfindungsgemäße Verfahren, den "semantischen Hyperfokus" einsetzen möchte oder nicht. Es sollte selbstverständlich die Option möglich sein, das Verfahren nach Wunsch ein- oder auszuschalten.

Ohne manuelle Eingriffe und für den Benutzer unbemerkt ist es mittels des erfindungsgemäßen Verfahrens möglich, die Bewegungen des Cursors durch die Dialogmasken der Dialog-Anwendung 2 hindurch zu registrieren, so daß bei Erreichen eines deklarierten semantischen Kontextbereiches eine entsprechende Suche und Neu-Positionierung des sichtbaren Anzeigebereichs des eingescannten Dokuments in dem Fenster 1a der ersten Anwendung möglich ist. Hierbei verwendet eine eingesetzte Software die zuvor definierten Koordinaten und/oder Parameter des Formulars bzw. der Dialoganwendung und berechnet hieraus, unter Berücksichtigung von graphischen Formatdaten des Dokuments und der Anzeigemöglichkeit des zur Anzeige zur Verfügung stehenden Fensters 1a ("View") die für den Benutzer optimierte Position der relevanten Information.

Das erfindungsgemäße Verfahren kombiniert also für den Benutzer automatisch zwei in verschiedenem Format vorliegende Datensätze bzw. Informationen.

Setzt nun der Benutzer den Cursor beispielsweise in das Datenfeld 2b "Geburtsdatum", so erkennt das erfindungsgemäße Verfahren den damit implizit verbundenen Wechsel, der den Cursor über die Bereichsgrenze der semantischen Kontextfläche 15 hinwegführt, und positioniert unverzüglich den neuen kontextrelevanten Formularausschnitt (mit Graphikfokus) im Fenster der ersten Anwendung 1.

Somit hat der Benutzer stets den ihn interessierenden Formularausschnitt des digitalisierten Dokuments mit den kontextrelevanten Informationen im Blickfeld, ohne immer wieder durch manuelle Verschiebungen neue Positionen suchen zu müssen.

Es sei angemerkt, daß die hier gezeigten hervorgehobenen Bereiche, beispielsweise Bereich 15, nur zur Vereinfachung der Darstellung markiert sind. Sie lassen sich vom Benutzer frei gestalten oder ganz oder teilweise ausblenden.

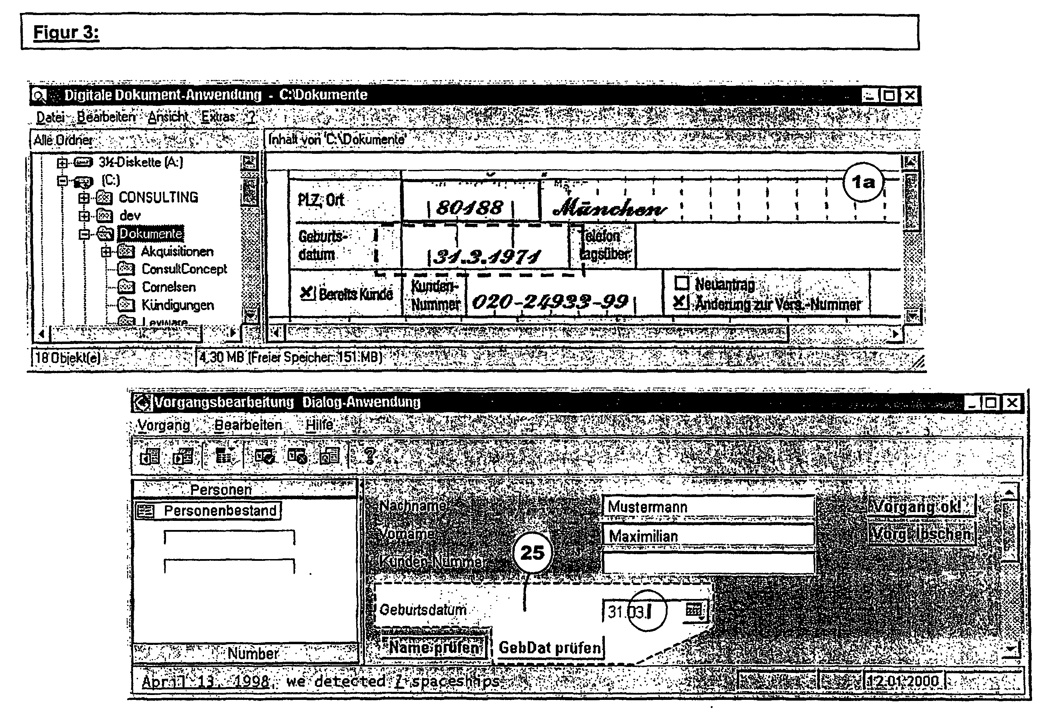

Der dem Geburtsdatum zugeordnete Kontextbereich ist in Figur 3 mit 25 bezeichnet. Man erkennt ferner, daß in dem Fenster 1a der die entsprechenden Informationen tragende Bereich des eingescannten Dokuments positioniert ist. Auch weitere kontextrelevante Informationen hat der Benutzer im Verlauf des weiteren Bearbeitungsvorgangs, ohne eigenes Zutun, nur durch die Bewegungen des herkömmlichen Cursors, im Blickfeld und kann diese bequem ablesen. Selbstverständlich kann der Benutzer durch Konfiguration angeben, mit welchem Zoom-Faktor er die graphische Darstellung des digitalisierten Dokuments vergrößern oder verkleinern möchte, um optimal arbeiten zu können.

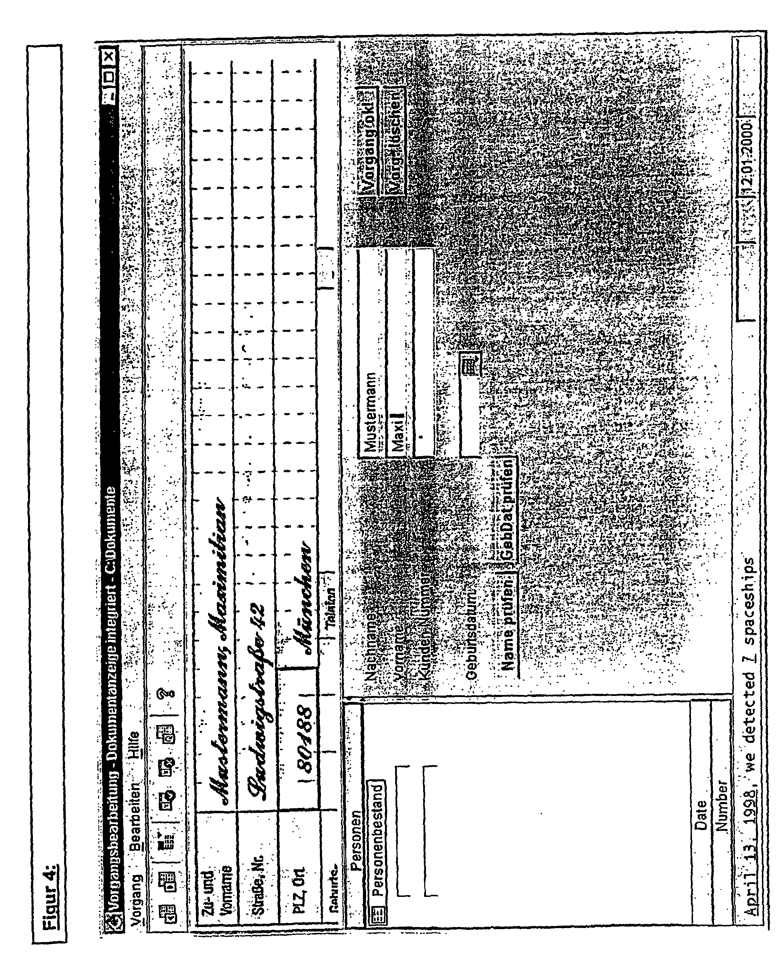

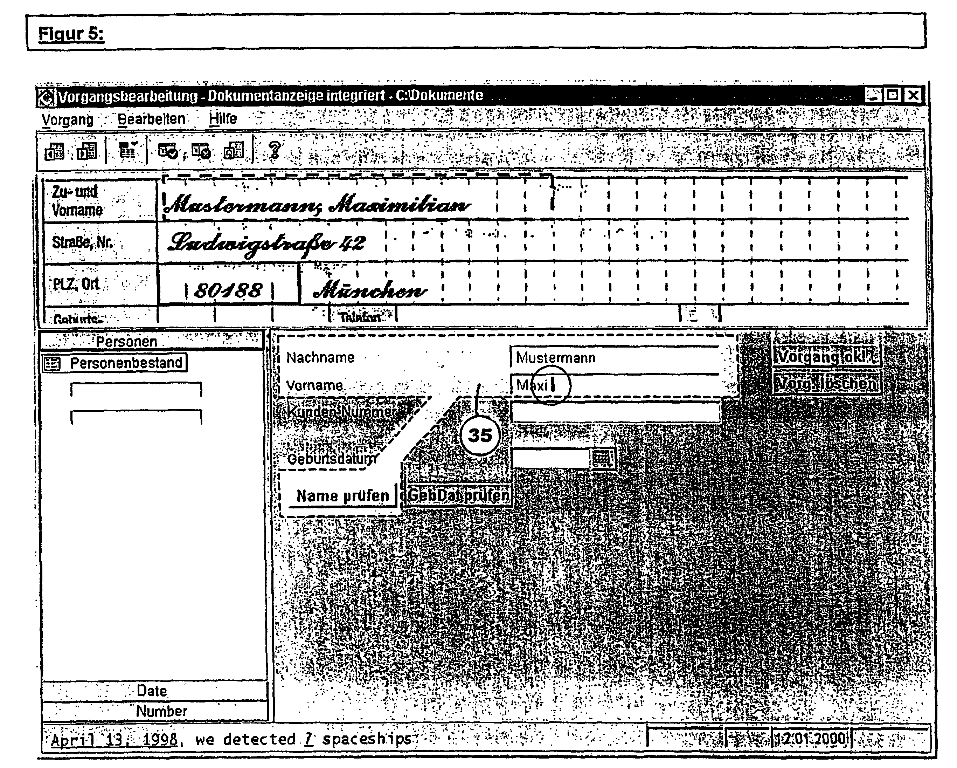

In den Figuren 4 und 5 ist ein weiteres Ausführungsbeispiel einer Benutzeroberfläche dargestellt, mit der das erfindungsgemäße Verfahren implementierbar ist.

Gemäß dieser Ausführungsform ist auf der Arbeitsoberfläche eines Computerbildschirms lediglich ein Anwendungsfenster 1 geöffnet. Es sei angemerkt, daß die in den Figuren 1 bis 3 beschriebenen Anwendungen 1, 2 hier in einem einzigen Anwendungsfenster zusammengefaßt sind. Es wäre möglich, diese kombinierte Anwendung insgesamt als eine Anwendung zu bezeichnen, wobei in diesem Falle von zwei Funktionalitäten einer Anwendung zu sprechen wäre. Insofern ist der im Rahmen der vorliegenden Offenbarung verwendete Begriff "Anwendung" auch im Sinne von "Funktionalität" interpretierbar. Hier ist die graphische Anzeigenkomponente, welche bei der oben beschriebenen Ausführungsform als weitere Anwendung einem separaten Anwendungsfenster zugeordnet war, als integrierter Teil im Fenster der dialogartigen Anwendung implementiert. Auf diese Art und Weise werden die Informationen des digitalisierten Formulars dem Benutzer in einem graphischen Fenster bzw. Anzeigebereich ("View") des gleichen Anwendungsfensters angezeigt. Hier ist der Benutzer, aufgrund der gegebenenfalls noch engeren flächigen Begrenzungen immer wieder dazu gezwungen, einzugreifen, um neue Positionierungen für Sichtausschnitte zu suchen. Die manuellen Eingriffe würden auch hier gemäß dem Stand der Technik über Tastaturbefehle oder über eine Maus erfolgen.

In Figur 5 erkennt man, entsprechend der Figur 2, einen semantischen Kontextbereich 35, welcher analog zu der oben ausführlich beschriebenen ersten Ausführungsform mit dem Teil des eingescannten Formulars, welcher die entsprechenden Informationen trägt, in Beziehung setzt und somit die Bearbeitung integriert.

Zusammenfassend seien die wichtigsten Eigenschaften des erfindungsgemäßen Verfahrens (semantischer Hyperfokus) noch einmal zusammengefaßt: Das erfindungsgemäße Verfahren verknüpft unterschiedlich vorliegende Informationsarten durch konfigurierbare, programmablaufgesteuerte und in Korrelation stehende Sichtbarkeitsbereiche. Das erfindungsgemäße Verfahren ist aus Anwendersicht ein Software-ergonomisches Mittel und ist als Softwaremodul für dialoggesteuerte Anwendungen realisiert. Zur Darstellung und Präsentation auf der Benutzeroberfläche kann das erfindungsgemäße Verfahren unterschiedliche graphische Elemente wie Zeiger, Kreise, Rahmen, unter anderem in unterschiedlichen Formen, annehmen bzw. verwenden.

Das erfindungsgemäße Verfahren integriert zwei bislang unabhängige Komponenten, nämlich den Graphik-Fokus und den herkömmlichen Bearbeitungs- bzw. Cursorfokus. Letzerer wird nur indirekt einbezogen, da er als passiver Signalgeber innerhalb der semantischen Kontextbereiche agiert. Der semantische Kontextbereich ist dabei eine Gruppierung von mit beispielsweise dem Cursor fokussierbaren Datenfeldern und Schaltknöpfen in der Dialoganwendung, und stellt somit eine fokuskorrelierte Verbindung zu der benutzergesteuerten Fokusaktivität im Bearbeitungsvorgang her.

Das erfindungsgemäße Verfahren ist z. B. für ein eingescanntes Dokument über diesem zugeordnete Positions-Koordinaten und Grafik-Cursorkoordinaten frei konfigurierbar. Es sind sowohl absolute als auch relative Koordinatenangaben, als auch verschiedene Koordinatensysteme verwendbar.

Im semantischen Kontextbereich ist die Menge der fokussierbaren Datenfelder und Schaltknöpfe frei konfigurierbar.

Die Konfiguration ist bei Verwendung allgemeiner und standardisierter Formularformate mit bestimmten Anwendungs-Dialog-Masken (Dialoge) in einer Konfigurationsdatenbank hinterlegbar.

Bei Bedarf ist das erfindungsgemäße Verfahren durch den Benutzer aktivierbar oder deaktivierbar. Aufgrund seiner Positionslogik und Funktionalität ist das erfindungsgemäße Verfahren in der Lage, einen sichtbaren Anzeigebereich (Ausschnitt) des eingescannten Dokuments (über die Positionskoordinaten) automatisch neu zu positionieren, sobald der Benutzer bearbeitungsbedingt seinen Bearbeitungs- bzw. Cursorfokus in der Dialoganwendung in einen anderen semantischen Kontext rückt.

Das erfindungsgemäße Verfahren ist auch in der Lage, Umkehrpositionierungen (semantische Positionierungen) vorzunehmen, oder bei Mehrdeutigkeiten in der Zuordnung bearbeitungspositionen in den Dialoganwendungen vorzuschlagen. Das heißt beispielsweise, daß durch Verwendung des Graphikfokus in der Viewer-Anwendung (d. h. der Ansicht des eingescannten Dokuments) der Benutzer in eine entsprechende Dialoganwendung mit aktivem Bearbeitungs- und Cursorfokus zurückpositioniert werden kann.

Der offensichtliche Nutzen bei Anwendung des erfindungsgemäßen Verfahrens besteht für den Benutzer darin, eine erheblich verbesserte ergonomische Integration der verschiedenen Datenformate zur Verfügung zu haben, bei welchen papiergestützte Vorgangsinformationen durch Digitalisierung und Zusammenführen am Benutzerarbeitsplatz produktiver gestaltet werden können (Rationalisierung in Richtung digitaler Vorgangsbearbeitung).

Die erfindungsgemäße Lösung zeichnet sich also dadurch aus, daß zwei Arten von Informationen (verschiedenen Anwendungen zugeordnet) parallel und simultan über ein neuartiges Softwareelement verknüpft werden. Hierbei werden anwendungsspezifische Datentypen und Datenstrukturen erfaßt oder verändert, wobei anwendungsspezifische Grafikobjekte zum Beispiel im Standardgrafikformat als Informationsquelle genutzt und zur Ansicht gebracht werden, beispielsweise als Bitmap-, tif- oder JPEG-Format.

Bei Aktivierung des erfindungsgemäßen Verfahrens wird stets der passende Formularausschnitt eines digitalisierten Dokuments mit den kontextrelevanten Informationen in das Blickfeld gerückt, ohne daß der Benutzer dies durch eigene Aktivitäten bewerkstelligen muß.

Agiert der Benutzer über den normalen Bearbeitungs- und Cursorfokus im semantischen Kontextbereich, wird das Verhalten des Grafikfokus als reagierender Teil durch das erfindungsgemäße Verfahren gesteuert. Agiert der Benutzer über den Grafikfokus im digitalisierten Dokument, wird das Verhalten des normalen Bearbeitungs- und Cursorfokus im semantischen Kontextbereich als reagierender Teil durch das erfindungsgemäße Verfahren gesteuert. Über die Aktivierung des erfindungsgemäßen Verfahrens existiert eine (polare) Verbindung der Datenstrukturen mit Grafikformaten über die üblichen Benutzerschnittstellen eines PCs.

Mittels des erfindungsgemäßen Verfahrens bzw. der zu seiner Durchführung verwendeten Software ist es möglich, konfigurierte, programmablaufgesteuerte und in sinnlichem Zusammenhang stehende Sichtbereiche (Grafikfokusbereich und semantischer Kontextbereich) zweier Anwendungen zu verbinden.

Das Verfahren implementiert eine Registrierungslogik zur Erkennung von sich ergebenden Fokus- oder Cursorverschiebungen in einen anderen semantischen Kontextbereich. Das Verfahren ist in der Lage, eine Berechnungslogik zur Neupositionierung und Optimierung der Sichtbarkeit der jeweils relevanten Informationsinhalte zu implementieren. Mittels des Verfahrens erfolgt automatisch eine Neupositionierung (des Dokuments oder des semantischen Kontextbereiches), sobald der Benutzer, bearbeitungsbedingt, seinen Bearbeitungs- und Cursorfokus in der Dialoganwendung in einen anderen semantischen Kontextbereich rückt (Reaktion des Grafikfokus). Umgekehrt ist das Verfahren in der Lage, Umkehr-Positionierungen vorzunehmen, oder bei Mehrdeutigkeiten in der Zuordnung Bearbeitungspositionen in den Dialoganwendungen vorzuschlagen. Das Verfahren ist in der Lage, die implementierte Registrierungslogik zur Erkennung und Berechnungslogik zur Neupositionierung auch dann umzusetzen, wenn der normale Bearbeitungs- und Cursorfokus sprachgesteuert in einen anderen semantischen Kontext versetzt wird.

Durch Anwendung der Erfindung ist insbesondere eine manuelle Übertragung von Informationen, welche z. B. handschriftlich in ein (anschließend eingescanntes) Formular eingefügt sind, auf eine dialogorientierte Computeranwendung möglich. Als besonders günstig erweist sich, daß Informationsbereiche bzw. Informationsfelder der jeweiligen Anwendungen einander zuordnenbar sind, ohne daß eine tatsächliche Informations- bzw. Texterkennung durch einen verwendeten Computer durchgeführt werden muß.

Es ist darauf hinzuweisen, daß informationstechnisch zwischen Datenstrukturen, die wie Variablen anzusehen sind (hier die Informationsfelder) und deren Inhalten (hier Informationen bzw. Informationswerte) zu unterscheiden ist. Eine Zuordnung von Variablen verschiedener Anwendungen erweist sich als wesentlich unaufwendiger verglichen mit einer Zuordnung von Informationen bzw. Informationswerten. Das erfindungsgemäße Verfahren ist also auch dann durchführbar, wenn z. B. das eingescannte Formular und/oder die Dialogfelder der dialogorientierten Anwendung leer sind und kein Inhalt vorhanden ist.

## Patentansprüche

1. Verfahren zur ergonomischen Koordinierung von einander zugeordneten Informationsfeldern wenigstens zweier abhängig oder unabhängig voneinander öffenbarer, und auf einem Bildschirm gemeinsam darstellbarer Anwendungen (1, 2) einer Computersoftware, wobei die erste Anwendung (1) eine grafische Darstellung eines digitalisierten Dokuments, insbesondere eines Formulars mit definierten Informationsfeldern, und die zweite Anwendung (2) eine dialogorientierte Anwendung mit den Informationsfeldern der ersten Anwendung jeweils zugeordneten Informationsfeldern ist,
**dadurch gekennzeichnet,**
**daß** eine automatische Positionierung von Informationsfeldern der ersten Anwendung (1) in einem durch die erste Anwendung generierten Fenster (1a) in Abhängigkeit von einem in Bearbeitung befindlichen Informationsfeld der zweiten Anwendung (2) durchgeführt wird.

2. Verfahren nach Anspruch 1, **dadurch gekennzeichnet, daß** die Informationsfelder der zweiten Anwendung (2) mittels eines Fokus, insbesondere eines Cursors (17) und/oder eines sprachgesteuerten Fokus, hervorgehoben werden, wobei insbesondere semantische Kontextbereiche der Informationen oder der Informationsfelder einsetzbar und/oder durch den Benutzer definierbar sind.

3. Datenverarbeitungssystem zur Durchführung des Verfahrens nach einem der Ansprüche 1 oder 2, mit Mitteln zum gleichzeitigen Öffnen wenigstens zweier Anwendungen (1, 2) einer Computersoftware, wobei die erste Anwendung (1) eine grafische Darstellung eines digitalisierten Dokuments, insbesondere eines Formulars mit definierten Informationsfeldern, und die zweite Anwendung (1) eine dialogorientierte Anwendung zur Eingabe und/oder Wiedergabe und/oder Verarbeitung von Informationen, welche dem digitalisierten Dokument zuordnenbar ist, ist, und wobei Mittel zur Generierung eines Fensters (1a) durch die erste Anwendung, in welcher die darzustellenden Informationsfelder der ersten Anwendung darstellbar sind, vorgesehen sind,
**gekennzeichnet durch**
Mittel zur automatischen Positionierung von Informationsfeldern der ersten Anwendung in dem Fenster (1a) in Abhängigkeit von in Bearbeitung befindlichen Informationsfeldern der zweiten Anwendung (2).

4. Datenverarbeitungssystem nach Anspruch 3, **gekennzeichnet durch** einen Cursor (17) zum Hervorheben der Informationen bzw. Informationsfelder der zweiten Anwendung (2).

5. Computerprogramm mit Computerprogramm-Codiermitteln, welche derart eingerichtet sind, daß sie sämtliche Schritte wenigstens eines der vorstehenden Ansprüche 1 oder 2 ausführen, wenn das Programm auf einem Computer abläuft.

6. Computerprogramm nach Anspruch 5, welches auf einem computerlesbaren Medium ausgeführt ist.

## Claims

1. Method of ergonomically coordinating associated information fields of at least two applications (1, 2) of a piece of computer software which can be opened dependently on one another or independently of one another and displayed together on a screen, the first application (1) being a graphic display of a digitalised document, particularly a form with defined information fields, and the second application (2) being a dialogue-oriented application with information fields associated with the information fields of the first application, **characterised in that** information fields of the first application (1) are automatically positioned in a window (1a) generated by the first application, as a function of an information field of the second application (2) which is being processed.

2. Method according to claim 1, **characterised in that** the information fields of the second application (2) are highlighted by means of a focus, particularly a cursor (17) and/or a voice-controlled focus, while, in particular, semantic context areas of the information or information fields can be used and/or can be defined by the user.

3. Data processing system for carrying out the method according to one of claims 1 or 2, with means for simultaneously opening at least two applications (1, 2) of a piece of computer software, the first application (1) being a graphic display of a digitalised document, particularly a form comprising defined information fields, and the second application (1) being a dialogue-oriented application for inputting and/or reproducing and/or processing information which is to be assigned to the digitalised document, wherein means are provided for generating a window (1a) by means of the first application, in which the information fields of the first application which are to be displayed are capable of being displayed, **characterised by** means for automatically positioning information fields of the first application in the window (1a) as a function of information fields of the second application (2) which are being processed.

4. Data processing system according to claim 3, **characterised by** a cursor (17) for highlighting the information or information fields of the second application (2).

5. Computer programme with computer programme coding means which are set up so that they perform all the steps of at least one of the preceding claims 1 or 2 when the programme is running on a computer.

6. Computer programme according to claim 5 which is provided on a computer-readable medium.

## Revendications

1. Procédé pour la coordination ergonomique de champs d'informations mutuellement associés d'au moins deux applications (1, 2) d'un logiciel pour ordinateur susceptibles d'être ouvertes en dépendance mutuelle ou indépendamment l'une de l'autre et d'être illustrées conjointement sur un écran, la première application (1) étant une illustration graphique d'un document numérisé, en particulier d'un formulaire avec des champs d'informations définis et la deuxième application (2) étant une application à vocation de dialogue comportant des champs d'informations associés aux champs d'informations respectifs de la première application,
**caractérisé en ce que**
l'on procède à un positionnement automatique de champs d'informations de la première application (1) dans une fenêtre (1a) générée par la première application en fonction d'un champ d'informations en cours de traitement de la deuxième application (2).

2. Procédé selon la revendication 1, **caractérisé en ce que** les champs d'informations de la deuxième application (2) sont mis en évidence au moyen d'une focalisation, en particulier d'un curseur (17) et/ou d'une focalisation à commande vocale, dans lequel en particulier des zones de contexte sémantiques des informations ou des champs d'informations peuvent être utilisées et/ou définies par l'utilisateur.

3. Système de traitement de données pour mettre en oeuvre le procédé selon l'une ou l'autre des revendications 1 et 2, comportant des moyens pour ouvrir simultanément au moins deux applications (1, 2) d'un logiciel pour ordinateur, la première application (1) étant une illustration graphique d'un document numérisé, en particulier d'un formulaire avec des champs d'informations définis et la deuxième application (2) étant une application à vocation de dialogue pour entrer et/ou reproduire et/ou traiter des informations, susceptible d'être associée au document numérisé, des moyens étant prévus pour générer une fenêtre (1a) par la première. application dans laquelle peuvent être représentés les champs d'informations à représenter de la première application,
**caractérisé par**
des moyens pour le positionnement automatique de champs d'informations de la première application dans la fenêtre (1a) en fonction de champs d'informations en cours de traitement de la deuxième application (2).

4. Système de traitement de données selon la revendication 3, **caractérisé par** un curseur (17) pour mettre en évidence les informations ou les champs d'informations de la deuxième application (2).

5. Programme d'ordinateur comportant des moyens de codage de programme d'ordinateur qui sont installés de manière à effectuer toutes les étapes de l'une au moins des revendications précédentes 1 ou 2, lorsque le programme se déroule sur un ordinateur.

6. Programme d'ordinateur selon la revendication 5, qui est enregistré sur un support lisible par ordinateur.
